# EUROPEAN PATENT APPLICATION

(11) **EP 4 459 159 A1**
(43) Date of publication of application: **06.11.2024**
(21) Application number: 23170965.0
(22) Date of filing: 02.05.2023
(51) Int. Cl.: F16J 15/10, F02B 77/00, F16J 15/12

(54) **RADIAL SEALING CAP**

(71) Applicant: Trelleborg Sealing Solutions Kalmar AB, 391 28 Kalmar (SE)
(72) Inventor: HAGLUND, Sven, 395 94 ROCKNEBY (SE); ANDERSSON, Mattias, 382 74 ALSTERBRO (SE)
(74) Representative: Brann AB

(57) **Abstract**

A radial sealing cap (10) that comprises a first layer (12), wherein the first layer (12) is of a first material having a first Young's modulus, the first layer (12) has a first side (14) facing in a first direction and a second side (16) facing in a second direction, the first layer (12) has a circular first rim (13) defining a plane (17) in which the first rim (13) is embedded, and the first layer (12) has a slope relative to the plane (17) at the first rim (13). The sealing cap (10) further comprises: a second layer (24) attached to the first side (14) of the first layer (12), wherein the second layer (24) is of a second material having a second Young's modulus that is lower than the first Young's modulus, and the second layer (24) protrudes radially from the first layer (12) at the first rim (13).

## Description

### Technical field

The proposed technology relates generally to the field of sealing caps for providing a fluid-tight seal in an opening in a wall of a structure, for example a cam shaft hole in a cylinder head.

### Background

Sealing caps are cupped circular metal products with flat base and a raised circumferential wall which forms a U-shaped profile. Some conventional sealing caps are made of thick stamped metal, see for example the DIN443 standard. Such sealing caps may also be referred to as core plugs or frost plugs used for blocking off openings in engine cylinder blocks. This type of sealing plugs establishes a metal-to-metal interference fit. Both the sealing plug and the structure in which it is installed may permanently deform. If properly installed, these sealing cups can withstand high fluid pressures. These sealing caps are cheap to produce but have certain disadvantages. For example, the sealing cap or the structure it is installed in may crack and some applications require smooth contact surfaces and adhesives for a secure sealing and attachment.

Other types of conventional sealing caps are made of a thin metal stamped to form a cup-shaped metal body with a substantially flat base and a circumferential side wall. The metal body has a rubber layer that contacts the structure when installed and the side wall biases the rubber against the structure. Compared with the previously described sealing caps, this type presses less against the structure and are typically used in lower fluid-pressure applications. There is a risk that the rubber is damaged in installation. The rubber may also deteriorate, which can affect both the attachment and the sealing. For example, an ageing rubber may cause the sealing cap to come loose or leak.

### Object

It is an object of the proposed technology to provide a sealing cap that is cheap to produce. It is a further object to improve the installment of a sealing cap, for example to make it easier to install and to reduce the risk of structural damage. It is a further object provide a sealing cap with a more secure attachment to a structure, for example to withstand higher pressures within the structure. It is a further object provide a sealing cap with an improved sealing to a structure. It is a further object to provide a sealing cap for shallow mounting.

### Summary

In a first aspect of the proposed technology, a radial sealing cap, or radial sealing washer, is proposed that comprises: a first layer, or base plate, wherein the first layer is of a first material having a first Young's modulus, the first layer has a first side facing in a first direction and a second side facing in a second direction, the first layer has a circular first rim defining a plane in which the first rim is embedded, and the first layer, or second side, has a slope, or inclination, relative to the plane at the first rim. The sealing cap further comprises: a second layer, or sheet, attached to, or sandwiched on, the first side of the first layer, wherein the second layer is of a second material having a second Young's modulus that is lower than the first Young's modulus, and the second layer protrudes radially from the first layer at the first rim.

Here, the sealing cap is described in a pre-installment state. It is understood that the sealing cap is configured to have a post-installment state in which the sealing cap is deformed, for example in a fitting in the hole of a structure.

The specified features allow for a shallow mounting of the sealing cap in a hole having a conforming size and shape, which in turn allows for it to be mounted in hole of a structure having thinner walls. Additionally, when mounting the proposed sealing cap, it typically subjects the structure to less force than existing sealings caps.

The first layer and/or the second layer may be imperforated. That an element is imperforated means that no fluid can pass through the element as such. For example, there are no holes in the element through which a fluid can pass. The sealing cap may be arranged to provide a fluid-tight sealing, such as a gas-tight or liquid-tight sealing, to a structure.

It is understood that the relation between the first Young's modulus and the second Young's modulus is at room temperature, or about 20°C. The first layer is sloping relative to the plane at the first rim has the effect that the protruding second layer will shift radially outwards if the slope is decreased, for example at a deformation of the first layer. It is understood that if the first layer is deformed, the second layer attached to the first side of the first layer is also deformed.

It is understood that the first rim defines a circle embedded in the plane. It is further understood that the second layer may protrude from the first rim along the complete first rim. It is further understood that the specified first direction and the second direction may be opposite.

The second layer may cover the complete first side of the first layer. This allows for simple manufacturing, see for example the manufacturing method described below.

The first layer may extend, or project, in the second direction relative to the first rim. The second layer is attached to the first side of the first layer, which means that the second layer may also extend, or project, in the second direction relative to the first rim.

The first layer, or the first side, may define an interior angle to the plane at the first rim. For example, the interior angle may be in the range 10° to 40°, 15° to 35°, or 20° to 30°. This means that the second side may define an exterior angle to the plane in the range 140° to 170°, 145° to 165°, or 150° to 160°.

The first layer may be plastically deformable. The second layer may be elastically deformable, or resilient. It is understood that this is at the intended use of the sealing cap. The first layer may be configured to plastically deform by a deforming force in the first direction acting on the first layer. Here, a deforming force is understood to be sufficiently strong to achieve a deformation. The deforming force may be centered at the center of the first rim, or at the center of the circle defined by the first rim.

The first layer may be configured to decrease the slope of the first layer, or second side, at the first rim at a deformation of the first layer in the first direction.

The first rim may have a rim surface interconnecting the first side and the second side of the first layer. The rim surface may be transverse to the first side and the second side at the rim. It is understood that the rim surface is annular. It is further understood that the rim surface may be unbroken. Here, an unbroken surface is understood to have no holes or sharp features, such as furrows or grooves.

The first side may have a circular first edge. The rim surface may connect to the first side at the first edge. Similarly, the second side may have a circular second edge. The rim surface may connect to the second side at the second edge. Worded differently, the first layer may have a circular first edge connecting the first side and the rim surface, and the first layer may have a circular second edge connecting the second side and the rim surface. The first edge and the second edge may be centered on a common axis. The second layer may protrude radially from, or extends radially beyond, the first edge of the first side. It is understood that this is relative to the circular first edge, or relative to the common axis.

The circular first edge may have a first radius (R1), the circular second edge may have a second radius (R2), and the second radius (R2) may be greater than the first radius (R1). This means than during installation in a circular cylindrical hole of a structure, the second edge engages the structure before the first edge.

The sealing cap may be configured to increase the first radius (R1) of the first edge at a deformation of the first layer in the first direction. This contributes to sealing the second layer to a structure. The sealing cap may be configured to increase the first radius (R1) of the second edge at a deformation of the first layer in the first direction. Similarly, the sealing cap may be configured to increase the second radius (R2) of the second edge at a deformation of the first layer in the first direction. This contributes to a secure fitting of the sealing cap in a circular cylindrical hole of a structure. The first radius (R1) of the first edge may increase more than the second radius (R2) of the second edge at a deformation of the first layer in the first direction. Worded differently, the difference between the first radius (R1) and the second radius (R2) may be smaller after the deformation.

The second layer may have a circular second rim having a third radius (R3). The radius of the second rim is understood as the maximum radius of the second rim. For example, the second rim may have a rim surface with a convex cross section having an apex facing radially outwards, and the radius of the second rim is then defined by the apex.

The third radius (R3) may be greater than the first radius (R1). This means that the second layer protrudes radially from the first layer at the first rim, as specified above. The third radius (R3) may be smaller than the second radius (R2). This prevents contact between the protruding part of the second layer and the structure when mounting the sealing cap before deforming, thus contributing to an easier handling. The sealing cap may be configured to increase the radius of the second rim at a deformation of the first layer in the first direction. The third radius (R3) of the second rim may be greater than the second radius (R2) of the second edge after the deformation. This allows for an improved sealing.

The abovementioned rim surface may define a section of a cone, or a conical geometry, having an apex on the first side that is spaced apart from first layer. The apex of the cone, or conical geometry, may be centered on the common axis.

The first layer may have an outer portion forming the first rim. The first layer may further have an inner portion, wherein the outer portion and the inner portion jointly form the first layer. It is understood that the outer portion is annular and surrounds the inner portion. The outer portion and the first rim may be circular symmetric relative to a common axis, or the abovementioned common axis on which the first edge and the second edge are centered. The first layer, or the outer portion, may have an axial extension, or projection, along the common axis that is 10% to 30%, or 150 to 25%, of the radius of the first rim. The radius of the circular first rim is understood as the maximum radius of the first rim. It may coincide with the radius of the circular first edge.

The first layer may form a bulge projecting in the second direction. The abovementioned outer portion may project the bulge in the second direction.

It is understood that the complete first layer may form the bulge. This means that the bulge extends over the complete first layer, or the complete second side of the first layer.

It is understood that the abovementioned deformation of the first layer in the first direction may be achieved by an at least partial inversion of the bulge. It is specified that the bulge project in the second direction. Thus, it is understood that the at least partial inversion of the bulge is in the first direction.

The bulge may be circular symmetric, for example relative to the common axis. Worded differently, the bulge may be rotationally symmetric around the common axis. The bulge, or the outer portion, may project on the second side of the first layer. The bulge, or the outer portion, may project in the second direction relative to the first rim. It may project by 10% to 30%, or 15% to 25%, of the radius of the first rim or the second edge.

As specified above, the first layer may be configured to plastically deform by a deforming force in the first direction acting on the first layer. More specifically, the bulge may be configured to plastically deform by a deforming force in the first direction acting on the first layer. For example, the bulge may at least partially invert in the first direction when deformed, or at the deformation of the first layer in the first direction.

The first side may conform to the second side. For example, the first side may be concave shape and the second side have a convex shape matching the concave shape. This allows for two or more of the sealing caps to be stacked coaxially in a compact manner. For example, two sealing caps can be positioned sequentially in a through hole before deforming the sealing caps. This way, the second sealing cap forms a second sealing that can stop leakage through the first sealing cap.

The second edge may be exposed for establishing a radial attachment or connection, for example in a circular cylindrical hole of a structure. It is understood that the radial attachment is relative to the first rim or circular second edge. This allows for the first material to form the connection in the fitting, which contributes to a more secure fitting. In extension, the sealing cap can withstand higher pressures. The fitting will typically also become less sensitive to high temperatures compared with technologies in which there is a more elastically deformable material establishing the connection in the fitting.

The rim surface may be exposed, for example for establishing radial attachment, or connection, to a structure. It is understood that radial attachment is relative to the first rim or the common axis. This means that the rim surface is not covered by the second layer.

The bulge may form concave surface on the first side and a convex surface on the second side. The complete first side of the first layer may be concave and the complete second side may be convex. Alternatively, the outer portion may be locally convex on the second side and the inner portion may be locally concave on the second side. The outer portion may then be locally concave on the first side and the inner portion may be locally convex on the first side. Worded differently, the outer portion may form the abovementioned bulge projecting in the second direction and the inner portion may form an additional bulge projecting in the first direction. Alternatively, the outer portion may be locally convex on the second side and the inner portion may be planar on the second side. The outer portion may then be locally concave on the first side and the inner portion may be planar on the first side. Worded differently, the outer portion may form the abovementioned bulge projecting in the second direction and the inner portion may be planar.

The first layer has a uniform thickness. Worded differently, the first layer may be manufactured from a planar sheet of the first material having a uniform thickness. This allows for an easier manufacturing. A uniform thickness of a layer means that it has the same thickness at all points on the layer, with the thickness at each point corresponding to the dimension of the layer transverse, or normal, to the layer as such at the point. Worded differently, the uniform thickness corresponds to the distance between the first side and the second side of the first layer.

The thickness of the first layer may be greater than 1% or 2% of the diameter of the first rim or the circular first edge. Additionally, or alternatively, the thickness of the first layer may be smaller than 4% or 5% of the diameter of the first rim or the circular first edge. For example, the thickness of the first layer may be in the range 0.1-1 mm, 0.2-0.8 mm, or 0.4-0.6 mm, or in one of the ranges 0.1-0.3 mm, 0.3-0.6 mm, or 0.6-1 mm. It has been found that the thickness of the first layer specified here provides a good attachment in most applications.

The second layer may have a uniform thickness. Worded differently, the second layer may be manufactured from a sheet of the second material having a uniform thickness. This allows for an easier manufacturing.

The thickness of the second layer may be greater than 0.1 mm, or 0.2 mm. Additionally, or alternatively, the thickness may be smaller than 1 mm, or 2 mm. For example. The thickness of the second layer may be in the range in the range 0.1-2 mm, 0.2-1.6 mm, or 0.4-1.0 mm, or in one of the ranges 0.1-0.6 mm, 0.3-1.2 mm, or 0.6-2 mm. It has been found that the thickness of the second layer specified here provides a good sealing in most applications.

The second layer may protrude radially from the first layer, or from the first edge, by 5-15%, or 8-13%, of the thickness of the second layer. It has been found that this provides a good sealing in most applications.

The first material may be, or may comprise, metal. The metal may be steel or an aluminum alloy. For example, the steel may be a stainless steel or a carbon steel. The metal may be sheet metal.

The first material may be a composite material. For example, the first material may be composed of galvanized steel, or of steel with a layer of paint on the second side.

The second material may be, or comprise, a polymer or elastomer. The second material may be a rubber, such as ethylene acrylic rubber (AEM rubber). For example, the sealing cap may be manufactured from a composite material comprising a first layer of the first material and a second layer of the second material. The composite material may be produced by bonding a sheet of the second material on a sheet of the first material, for example using a bonding agent.

In a second aspect of the proposed technology, a mounting tool is proposed for holding and mounting a radial sealing cap according to the first aspect of the proposed technology. The sealing cap comprises the first layer, the second side, and the first rim. The mounting tool comprises: an outer part, or holder, configured to position the sealing cap in a first position relative to the mounting tool; an intermediate part, or first piston part, slidably supported within the outer part and configured to engage the second side at the first rim, or at the outer portion of the first layer forming the first rim; and an inner part, or second piston part, slidably supported within the intermediate part and configured to engage the second side at the center of the first rim, at the common axis of the first edge and the second edge, or at the center of the circle defined by the first rim.

Thus, the outer part can be used to position the sealing cap at a through hole of a structure, the intermediate part can be used to position the sealing cap within the through hole, and the inner part can be used to deform the sealing cap, or more precisely to invert the bulge, to establish a radial fitting. Worded differently, the outer part may be configured to position the sealing cap at a through hole of a structure, the intermediate part may be configured to position the sealing cap within the through hole, and the inner part may be configured to deform the first layer in the first direction.

The outer part, the intermediate part, and the inner part may have a rotational symmetry relative to a symmetry axis, and the outer part may be configured to position the sealing cap with the center of the first rim, or the common axis of the first edge and the second edge, aligned with the symmetry axis. Worded differently, the outer part, the intermediate part, and the inner part may be coaxial. The outer part may be configured to position the sealing cap concentrically relative to the outer intermediate part.

The outer part may be configured to engage, or conforms to, the first rim or the second edge of the sealing cap. The intermediate part may be configured to push the sealing cap from the first position along the symmetry axis, or the common axis of the first edge and the second edge of the sealing cap. The inner part may be configured to deform the first layer of the sealing cap, or at least partly invert the bulge formed by the first layer, in a fitting in a structure, for example with the second layer of the sealing cap engaging the structure at the first rim.

The outer part may outline, or form, a hollow first cylinder having an open first end and an open second end, wherein the first cylinder is configured to receive the sealing cap at the first end. For example, the hollow first cylinder may have a diameter that is greater than the diameter the first rim or the second edge of the sealing cap.

The outer part may have a first beveled portion at the first end of the first cylinder. The first beveled portion may have an inner surface conforming to the first cylinder. The first beveled portion may have an outer, or outward facing, tapered surface. The outer tapered surface may outline, or form, a section of a cone intersecting the first cylinder at the first end of the first cylinder.

The inner surface of the first beveled portion may be unbroken and annular. Similarly, the outer tapered surface may be unbroken and annular. The inner surface and the outer tapered surface may intersect and form a first acute edge. Worded differently, the outer part may have a first acute edge interconnecting the inner surface and the outer tapered surface. It is understood that the first acute edge is at the first end of the first cylinder. It is further understood that the inner surface of the first beveled portion is configured to engage, or conform to, the first rim or the second edge of the sealing cap.

The intermediate part may be slidably positioned, or supported, within the first cylinder. The intermediate part may outline, or form, a hollow second cylinder having an open first end and an open second end, wherein the intermediate part is configured to engage the sealing cap at the first end of the second cylinder.

The intermediate part may have a second beveled portion at the first end of the second cylinder. The second beveled portion may have an inner surface conforming to the second cylinder. The second beveled portion may have an outer surface conforming to the first cylinder outlined by the outer part. The second beveled portion may have an inner, or inward facing, tapered surface. The inner tapered surface may outline, or form, a section of a cone intersecting the second cylinder at the first end of the second cylinder. The inner tapered surface may interconnect the inner surface and the outer surface of the second beveled portion.

The inner surface of the second beveled portion may be unbroken and annular. Similarly, the outer surface of the second beveled portion may be unbroken and annular. The inner tapered surface may be unbroken. The outer surface and the inner tapered surface may intersect and form a second acute edge. Worded differently, the intermediate part has a second acute edge interconnecting the outer surface and the inner tapered surface. It is understood that the second acute edge is spaced apart from the first end of the second cylinder by the inner tapered surface. It is further understood that the second acute edge is configured to engage the sealing cap.

The intermediate part may be configured to extend through the first cylinder outlined by the outer part. This means that it extends at least from the first end to the second end of the first cylinder. This contributes to a simpler control and operation of the mounting tool.

The inner part may be slidably positioned, or supported, within the second cylinder. The inner part may have an outer surface conforming to the second cylinder. It is understood that the inner part may be configured to engage the sealing cap. The inner part may be configured to extend through the second cylinder. This means that it extends at least from the first end to the second end of the second cylinder. This contributed to a simpler control and operation of the mounting tool.

The inner part may have a cylindrical portion, wherein the cylindrical portion has an outer surface conforming to the second cylinder. The cylindrical portion may have a transverse surface. It is understood that the transverse surface is transverse, or at a right angle, to the second cylinder, or to the symmetry axis of mounting tool. The transverse surface is connected to the outer surface of the cylindrical portion. The outer surface of the cylindrical portion may be unbroken and annular. The transverse surface may be planar. Additionally, or alternatively, the transverse surface may be unbroken.

The mounting tool may have cap holder configured for releasably attaching the sealing cap to the inner part. The mounting tool may form part of the inner part. The cap holder may be centered on the abovementioned symmetry axis. The cap holder may comprise a magnet attached to the cylindrical portion, for example at the transverse surface. Alternatively, the cap holder may comprise a vacuum arrangement configured to cooperate with the sealing cap.

The mounting tool may have an initial state in which the outer part extends beyond the intermediate part. Additionally, the intermediate part may extend beyond the inner part in the initial state. The mounting tool may have an intermediate state in which the intermediate part extends beyond the outer part, or beyond the open first end of the hollow first cylinder. Additionally, the intermediate part may extend beyond the inner part in the intermediate state. The mounting tool may have a final state in which the intermediate part extends beyond the outer part, or beyond the open first end of the hollow first cylinder. Additionally, the inner part may extend beyond the intermediate part, or beyond the open first end of the hollow second cylinder in the final state. Here, the relative positions of the outer part, the intermediate part, and the inner part are understood to be in a direction from the second ends to the first ends.

In a third aspect of the proposed technology, an assembly is proposed comprising a structure forming a through hole and a mounting tool according to the second aspect of the proposed technology for holding a radial sealing cap according to the first aspect of the proposed technology. The structure has an outer, or first, portion, an intermediate, or second, portion, and an inner, or third, portion that jointly forms the through hole,
- the outer portion is configured to cooperate with the outer part of the mounting tool for centering the sealing cap on, or relative to, the through hole,
- the intermediate portion is configured to cooperate with the intermediate part of the mounting tool to receive the sealing cap, and
- the inner portion is configured to cooperate with the inner part of the mounting tool for deforming the first layer of the sealing cap, or for inverting the bulge formed by the first layer, within the through hole.

Worded differently, the structure has a through hole, the outer part of the mounting tool is configured to position the sealing cap at the through hole, the intermediate part of the mounting tool is configured to position the sealing cap within the through hole, and the inner part of the mounting tool is configured to cooperate with the mounting tool and deform the first layer of the sealing cap, or to invert the bulge formed by the first layer, within the through hole for establishing a radial fitting of the sealing cap to the structure.

The assembly may further comprise the radial sealing cap as such, wherein sealing cap is held by the mounting tool.

Here, the terms inner and outer used in relation to the structure refer to the position when the mounting tool is used. They are not to be construed as limiting features of the structure as such. For example, the inner portion may be the outermost portion in a wall of the structure. The mounting tool is then used on the inside of the structure.

The outer portion, the intermediate portion, and the inner portion may have a rotational symmetry relative to a symmetry axis, or they may be concentric. Worded differently, the through hole may have a rotational symmetry relative to a symmetry axis. When mounting, this symmetry axis may align, or be colinear, with the abovementioned symmetry axis of the outer part, the intermediate part, and the inner part of the mounting tool. Worded differently, the portions of the structure and the parts of the mounting tool are configured to be concentric when mounting the sealing cap in the through hole.

The outer portion may have an inner, or inward facing, tapered surface configured to conform to, or cooperating with, the outer tapered surface of the first beveled portion of the outer part of the mounting tool. The outer portion may be configured to receive at least a part of the outer part of the mounting tool, or at least a part of the first beveled portion of the outer part. The inner tapered surface of the outer portion may be unbroken and annular. The inner tapered surface of the outer portion may outline, or form, a section of a cone.

The intermediate portion may be configured to receive the sealing cap. Additionally, the intermediate portion may be configured to receive the intermediate part of the mounting tool, or at least a part of the second beveled portion of the intermediate part. The intermediate portion may outline, or form, a hollow third cylinder. The hollow third cylinder may have a first end and an open second end. The hollow third cylinder may conform to the first cylinder outlined by the outer part of the mounting tool. For example, they may have the same diameter. The hollow third cylinder may have a diameter that is greater than the diameter of the first rim of the first layer of the sealing cap.

The inner portion may form a ledge configured to engage the second layer of the sealing cap at the first rim or the second rim. Worded differently, the ledge may be configured to cooperate with the intermediate part of the mounting tool for biasing the sealing cap against the structure.

The inner portion may outline, or form, a hollow fourth cylinder. The hollow fourth cylinder may have an open first end and an open second end. The hollow fourth cylinder may have a diameter that is smaller than the diameter of the third cylinder outlined by the intermediate portion. This contributes to forming the abovementioned ledge. The hollow fourth cylinder may have a diameter that is greater than the diameter of the second cylinder outlined by the intermediate part of the mounting tool. This allows for a more central engagement of the inner part with the sealing cap.

In a fourth aspect of the proposed technology, a sealed structure is proposed comprising a structure forming a through hole and a radial first sealing cap according to the first aspect of the proposed technology. The first sealing cap is positioned in the through hole, the first sealing cap is deformed, or the bulge formed by the first layer of the first sealing cap is at least partially inverted, within the through hole, and the first sealing cap is fixed, or radially fixed, to the structure. Worded differently, the first sealing cap is positioned within the through hole and is in its post-installment state.

The through hole may have any of the features described above. The first sealing cap may be positioned within the intermediate portion of the structure.

It is understood that the first layer is plastically deformed. The first layer may lock or fix the sealing cap to the structure, or to the intermediate portion of the structure. The first layer may contact and be biased against the structure, or the intermediate portion. More precisely, the first rim of the first layer, or the first edge of the first side of the first layer, may contact and be biased against the structure, or the intermediate portion.

The protruding second layer may seal to the structure, or to the intermediate portion of the structure. It is understood that this sealing is radial. The protruding second layer may contact or engage the structure, or the intermediate portion. More precisely, the second rim of the second layer may contact or engage the structure, or the intermediate portion.

As mentioned above, the first edge and the second edge of the first sealing cap may be centered on a common axis and the through hole may be rotationally symmetric relative to a symmetry axis. The common axis and the symmetry axis may be aligned. Worded differently, the first sealing cap and the through hole may be coaxial.

The sealed structure may further comprise a radial second sealing cap according to the first aspect of the proposed technology. The second sealing cap is positioned in the through hole, the second sealing cap is deformed, or the bulge formed by the first layer of the second sealing cap is inverted, within the through hole, and the second sealing cap is fixed, or radially fixed, to the structure. Worded differently, the first sealing cap is positioned within the through hole and is in its post-installment state.

It is understood that the second sealing cap may cooperate with the structure, the through hole, or the intermediate portion, as described above for the first sealing cap.

The first sealing cap and the second sealing cap may be of the same type. The second sealing cap may conform to, or be flush with, the first sealing cap. The second layer of the second sealing cap may face, or contact, the first layer of the second sealing cap.

The common axis of the second sealing cap and the symmetry axis of the through hole may be aligned. Worded differently, the second sealing cap and the through hole may be coaxial.

In a fifth aspect of the proposed technology, a method is proposed for mounting a radial first sealing caps according to the first aspect of the proposed technology in a through hole of a structure. The method comprises: positioning the first sealing cap in the through hole; and deforming the first sealing cap or the first layer of the first sealing cap for fixing, or radially fixing, the first sealing cap to the structure.

The method may further comprises: positioning a radial second sealing cap in the through hole; and deforming the second sealing cap or the first layer of the second sealing cap for fixing, or radially fixing, the second sealing cap to the structure.

It is understood that these steps may be performed after deforming the first layer of the first sealing cap. Alternatively, positioning of the second sealing cap may be after the positioning of the first sealing cap and before deforming the first sealing cap and the second sealing cap. Deforming the first sealing cap and the second sealing cap may be performed simultaneously.

As described above, the inner portion of the structure may form a ledge. The positioning may further comprise: positioning the first sealing cap with the first side of the first layer facing the ledge, or with the second layer contacting the ledge. This way, the ledge engages the second layer at the first rim or the second rim.

The positioning may further comprise: positioning the second sealing cap with the first side of the first layer facing the ledge or the first sealing cap, or with the second layer of the second sealing cap contacting the first sealing cap, or more precisely the first layer of the first sealing cap.

The deforming may result in the above-described sealed structure. The through hole may have any of the features described above. Each sealing cap may be positioned within the intermediate portion of the structure. As mentioned above, the first edge and the second edge of each sealing cap may be centered on a common axis and the through hole may be rotationally symmetric relative to a symmetry axis. When positioning the sealing cap, the common axis and the symmetry axis may be aligned. Worded differently, each sealing cap and the through hole may be coaxial.

The positioning of each sealing cap may further comprise: inserting the sealing cap in the through hole in the first direction, or inserting the sealing cap in the through hole with the first side facing the through hole.

The deforming may be in the first direction, which is the direction the first side of the first layer is facing. Deforming the first layer may comprise at least partially inverting the bulge formed by the first layer of the sealing cap. Deforming the first layer may comprise: subjecting the first layer to a deforming force in the first direction. The deforming force may be centered at the center of the first rim, or at the center of the circle defined by the first rim. The deforming may further comprise: biasing the sealing cap, or the second layer, against the ledge. It is understood that the ledge provides a counterforce to the deforming force in the second direction and distributed along the first rim. This will cause the sealing cap to be deformed at its center.

In a sixth aspect of the proposed technology, a system is proposed for manufacturing a radial sealing cap. The system comprises: a composite material comprising a first layer of a first material and a second layer of a second material attached to, or sandwiched on, the first layer, wherein the first material has a first Young's modulus and the second material has a second Young's modulus that is lower than the first Young's modulus. The system further comprises: a die assembly comprising a combined blanking die and forming die, or anvil; a punch, or stamp, configured to cooperate with the die assembly in a single punching. The composite material is positioned between the die assembly and the punch with the second layer facing the die assembly. The punch is configured to cooperate with the blanking die for cutting a blank, or workpiece, from the composite material. The die assembly is configured to position the blank at the forming die subsequent to blanking. The punch is configured to cooperate with the forming die to form the blank with a circular first rim defining a plane in which the first rim is embedded, and the first layer has a slope, or inclination, relative to the plane at the first rim.

It is understood that the resulting blank constitutes the sealing cap. The first layer in the resulting blank constitutes a first layer having a first side with a first edge and a second side with a second edge. The second layer of the blank constitutes a second layer attached to the first side of the first layer. It is specified that the second material of the composite material faces the die assembly. This will cause the second material to protrude radially from the first edge of the first side, or from the first layer at the first rim. The die assembly and the punch may further be configured to form the blank with any of the features described in relation to the first aspect of the proposed technology. The first material and the second material of the composite material may respectively have any of the features of the first material and the second material of the sealing cap described above.

The punch and the blanking die may have a clearance of 5-15%, or 5-10%, of the thickness of the first layer.

The forming die may be positioned within the blanking die. The blanking die may be circular. This way, the first layer of the resulting blank will have a circular first rim. Similarly, the second layer of the resulting blank will have a circular second rim, and the second layer will protrude radially from the first layer at the first rim.

The blanking die and the forming die may be concentric. The punch and the forming die may cooperate to form the blank with a bulge projecting towards the punch. The forming die may have convex portion facing the punch and cooperating with the punch to form the bulge projecting towards the punch, or to form the first layer of the blank with a first side having a concave shape and facing the forming die.

The punch may further have a smooth annular surface facing the forming die and curving inward and away from the forming die, wherein the annular surface is configured to engage and slide over the blank at the cooperation between the punch and the forming die. The annular surface may have a positive curvature or be locally convex. This contributes to avoid damaging the second side of the first layer. This is particularly important if the first layer is of galvanized steel. The annular smooth surface and the forming die may be concentric.

In a seventh aspect of the proposed technology, a method is proposed for manufacturing a radial sealing cap from a composite material using a die assembly and a punch, or stamp. The composite material comprises a first layer of a first material and a second layer of a second material attached to, or sandwiched on, the first layer, wherein the first material has a first Young's modulus and the second material has a second Young's modulus that is lower than the first Young's modulus. The die assembly comprises a combined blanking die and forming die, or anvil. The punch is configured to cooperate with the die assembly in a single punching, the punch is configured to cooperate with the blanking die for cutting a blank, or workpiece, from the composite material. The die assembly is configured to position the blank at the forming die subsequent to blanking, and the punch is configured to cooperate with the forming die to form the blank with a circular first rim defining a plane in which the first rim is embedded and the first layer has a slope, or inclination, relative to the plane at the first rim, and the method comprises: positioning the composite material between the die assembly and the punch with the second layer facing the die assembly, and operating the punch to form the blank.

The die assembly and the punch may further have any of the features described above in relation to the fifth aspect of the proposed technology. The first material and the second material of the composite material may respectively have any of the features of the first material and the second material of the sealing cap described above.

### Brief description of the drawings

A more complete understanding of the abovementioned and other features and advantages of the proposed technology will be apparent from the following detailed description of preferred embodiments in conjunction with the appended drawings, wherein:
Fig. 1a illustrates a cross-sectional side view of a radial sealing cap,
Fig. 1b illustrates a cross-sectional side view of the sealing cap of Fig. 1a with the bulge inverted,
Fig. 1c is a top view of the sealing cap of Fig. 1a
Figs. 2a and 2b illustrate cross-sectional and partial views of the sealing cap of Figs. 1a to 1c, respectively,
Fig. 3 illustrate a cross-section view of a mounting tool, the sealing cap of Figs. 1a to 1c, and a structure forming a through hole,
Figs. 4a to 4f schematically illustrate the function of the mounting tool of Fig. 3 in an assembly that includes the sealing cap, the mounting tool, and the structure forming a through hole,
Fig. 5 illustrates a system for manufacturing the sealing cap of Figs. 1a to 1c,
Figs. 6a and 6b illustrate radial sealing caps with different shapes from the same view as in Fig. 1a, and
Fig. 7 illustrate a cross-section view of a structure sealed with two radial sealing caps.

### Description of the drawings

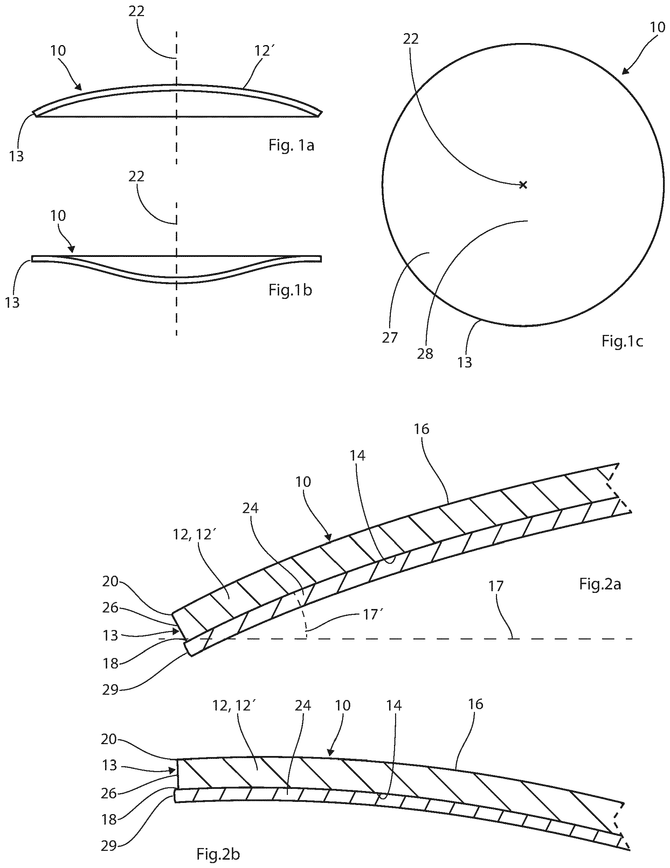

A radial sealing cap 10 is shown in Figs 1a to 1c with Figs. 2a and 2b illustrating a cross-sectional and partial views of the sealing cap of Figs. 1a to 1c. Fig. 1a shows the sealing cap 10 in a pre-installment state and Fig. 1b shows the sealing cap 10 in a post-installment state. The sealing washer has a first layer 12 of galvanized steel and a second layer 24 of AEM rubber. This means that the first layer 12 is of a first material having a first Young's modulus and the second layer is of a second material having a second Young's modulus that is lower than the first Young's modulus of the first material. In the applications of the installment of the sealing cap 10, the first layer 12 is plastically deformable and the second layer 24 is elastically deformable.

The first layer 12 has a first side 14 facing in a first direction and a second side 16 facing in a second direction opposite to the first direction. The first side 14 is convex and the second side 24 is concave and the first side 14 conforms to the second side 16. The first layer 12 has a circular first rim 13 defining a plane 17 in which the first rim 13 is embedded. There are no holes in the first layer 12 or the second layer 24 through which a fluid can pass in the first or second direction, making the sealing cap as a whole imperforated.

The first layer 12 defines an interior angle 17' of about 30° to the first plane 17 at the first rim 13, see Fig. 2a. This way, the first layer 12 is inclined relative to the plane 17 at the first rim 13. The first layer 12 projects in the second direction relative to the first rim 13. The second layer 24 is attached to the first side 14 of the first layer 12 and similarly projects in the second direction relative to the first rim 13. This way, the first layer 12 is configured to decrease the slope of the first layer 12 at the first rim 13 at a deformation of the first layer 12 in the first direction.

Both the first layer 12 and the second layer 24 has a uniform thickness. The thickness of the first layer 12 is 3% of the diameter of the first rim 12'.

The second layer 24 is attached to and covers the complete first side 14 of the first layer 12 and protrudes radially from the first layer 12 at the first rim 13. This means that if the first layer 12 is deformed, the second layer 14 is also deformed. The first layer 12 sloping at the first rim 13 means that the protruding second layer 24 shifts radially outwards if the slope is decreased, as is shown in Fig. 2b. The second layer 24 protrudes radially from the first layer 12 by about 10% of the thickness of the second layer 24.

The first side 14 of the first layer 12 has a circular first edge 18 at the rim 13. Similarly, the second side 16 of the first layer 12 has a circular second edge 20 at the rim 13. The first edge 18 and the second edge 20 are centered on a common axis 22. The second edge 20 is exposed such that it can establish a radial attachment in a fitting.

The first rim 13 has an annular rim surface 26 transverse to and interconnecting the first side 14 and the second side 16. The rim surface 26 is exposed and not covered by the second layer 24. The circular first edge 18 connects the first side 14 and the rim surface 26, and the circular second edge 20 connects the second side 14 and the rim surface 26. The rim surface 26 defines a conical geometry having an apex on the first side 14 that is spaced apart from first layer 12 and centered on the common axis 22.

The first layer 12 has an annular outer portion 27 forming the first rim 13. It also has an inner portion 28 surrounded by the outer portion 27 that together with the outer portion 27 form the first layer 12.

As can be seen in Fig. 1a, the complete first layer 12 form a circular symmetric bulge 12' in the pre-installment state that projects in the second direction, with the outer portion 27 primarily contributing to the projecting of the bulge 12'. The bulge 12' forms concave surface on the first side 14 and a convex surface on the second side 16. In the post-installment state shown in Fig. 1b, the first layer 12 is plastically deformed by a partial inversion of the bulge 12' in the first direction. The bulge 12' project along the common axis 22 in the second direction by about 20% of the radius of the first rim 13.

The circular first edge 18 has a first radius (R1) and the circular second edge 20 has a second radius (R2) that is greater than the first radius (R1), both in the pre-installment state shown in Fig. 2a and in the post-installment state shown in Fig. 2b. Both the first radius (R1) and the second radius (R2) increase at a deformation of the first layer 12 in the first direction, with the first radius (R1) increasing more than the second radius (R2). This means that difference between the first radius (R1) and the second radius (R2) is smaller after the deformation.

The second layer 24 has a circular second rim 29 with a maximum third radius (R3) that is greater than the first radius (R1) such that the second layer 24 protrudes radially from the first layer 12 at the first rim 13. With reference to Figs. 2a and 2b, the third radius (R3) is smaller than the second radius (R2) in the pre-installment state and greater than the second radius (R2) in the post-installment state after deformation.

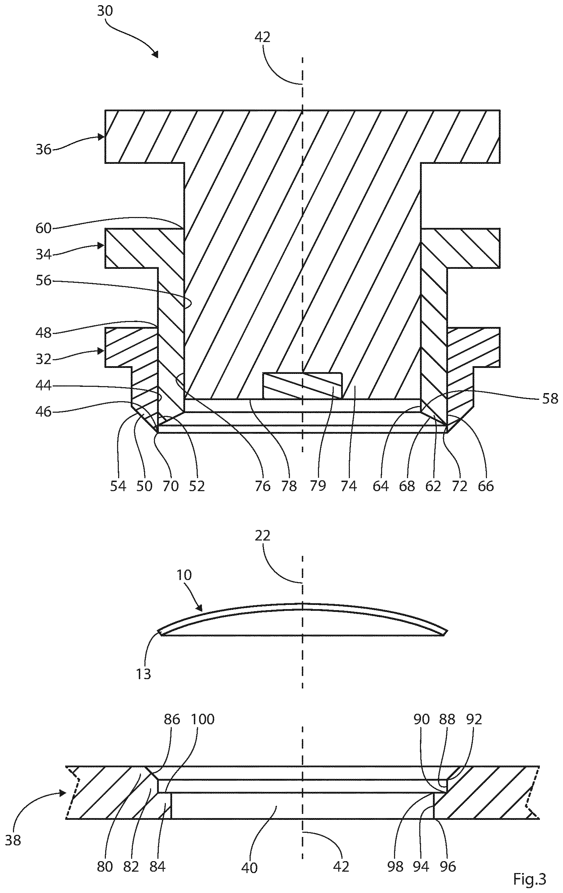

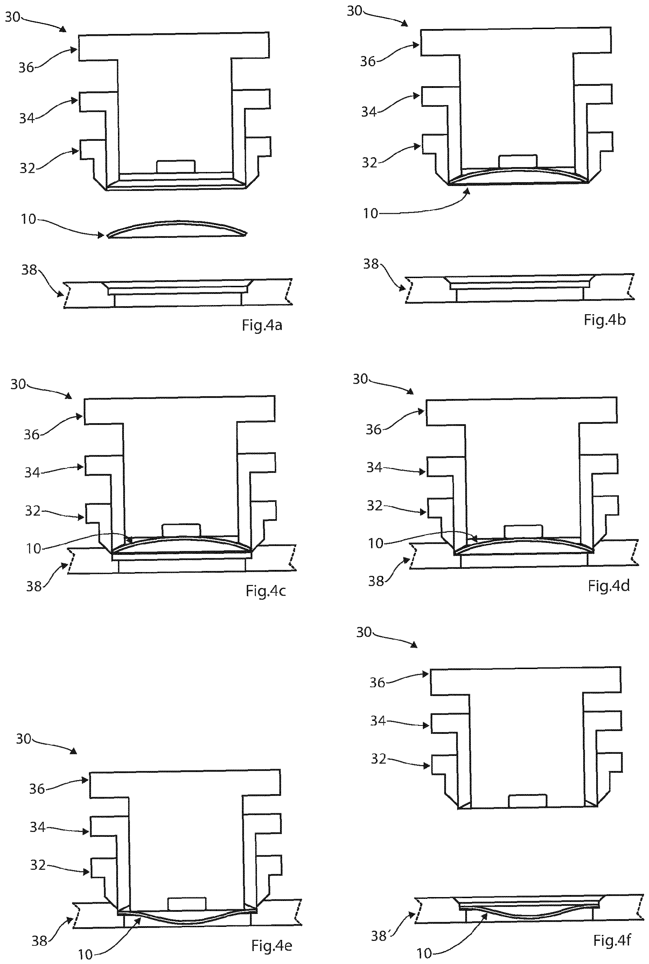

A cross-section view of an assembly including a mounting tool 30, the sealing cap 10 of Figs. 1a and 1b, and a structure 38 is shown in Fig. 3 and Fig. 4a. The function of the assembly is shown in Figs. 4c to 4f. The mounting tool 30 has an outer part 32, an intermediate part 34, and an inner part 36 that are rotational symmetric relative to a symmetry axis 42. The symmetry axis 42 of the mounting tool is aligned with the common axis 22 of the sealing cap 10, which means that it passes through the center of the first rim 13 of the sealing cap 10.

The structure 38 comprises an outer portion 80, an intermediate portion 82, and an inner portion 84 that are rotational symmetric relative to a symmetry axis 42 and jointly forms a through hole 40.

The outer part 32 positions the sealing cap 10 in a first position relative to the mounting tool 30 with the second side 16 of the first layer 12 facing the inner portion 84, as shown in Fig. 4b. The outer part 32 outlines a hollow first cylinder 44 having an open first end 46 and an open second end 48. The sealing cap 10 is received in the first cylinder 44 at the first end 46. The outer part 32 has a first beveled portion 50 at the first end 46 with an inner surface 52 conforming to the first cylinder 44. The sealing cap is positioned within the beveled portion 50, which conforms to the first rim 13 of the sealing cap 10. This way, the outer part 32 positions the sealing cap 10 at a through hole 40 of the structure, as shown in Fig 4c. The first beveled portion 50 has an outer tapered surface 54 outlining a cone intersecting the first cylinder 44 at the first end 46. This way, the inner surface 52 and the outer tapered surface 54 intersect and form a first acute edge 70. Both the inner surface 52 and the outer tapered surface 54 of the first beveled portion are unbroken and annular.

The outer portion 80 of the through hole 40 of the structure 38 has an inner tapered surface 86 that is unbroken an annular and outlines a section of a cone. It conforms and cooperates with the outer tapered surface 54 such that the sealing cap 10 is centered on the through hole 30. The outer portion 80 receives a part the first beveled portion 50 of the outer part 32 and the symmetry axis 42 of the through hole 40 is aligned with the symmetry axis 42 of the mounting tool 40, and in extension with the common axis 22 of the sealing cap 10, as shown in Fig. 4c. This way, the outer portion 80 is configured to cooperate with the outer part 32 of the mounting tool 30 for centering the sealing cap 10 on the through hole 40.

The intermediate part 34 is slidably supported within and extends through the first cylinder 44 outlined by the outer part 32. The intermediate part 34 outlines a hollow second cylinder 56 having an open first end 58 and an open second end 60. The intermediate part 34 engages the second side 16 of the first layer 12 sealing cap 10 at the first end 58 of the second cylinder 56 and pushes the sealing cap 10 from the first position along the symmetry axis 42, as shown in Fig. 4d. This way, the sealing cap 10 is inserted in the through hole 40 in the first direction of the sealing cap 10.

The intermediate part 34 has a second beveled portion 62 at the first end 58 of the second cylinder 56. It has an inner surface 64 conforming to the second cylinder 56 and an outer surface 66 conforming to the first cylinder 44 outlined by the outer part 32. The second beveled portion 62 also has an inner tapered surface 68 outline a section of a cone intersecting the second cylinder 56 at the first end 58 and interconnecting the inner surface 64 and the outer surface 66 of the second beveled portion 62.

Both the inner surface 64 and the outer surface 66 of the second beveled portion 62 is unbroken and annular. The outer surface 66 and the inner tapered surface 68 intersect and form a second acute edge 72 that is spaced apart from the first end 58 of the second cylinder 56. The second acute edge 72 engage the sealing cap 10, as shown in Fig. 4d.

The intermediate portion 82 of the structure outlines a hollow third cylinder 88 having a first end 90 and an open second end 92. The hollow third cylinder 88 has the same diameter as the first cylinder 44 outlined by the outer part 32 of the mounting tool 30. This means that it has a diameter that is greater than the diameter the first rim 13 of the sealing cap 10. This way, the intermediate portion 82 is configured to receive the sealing cap 10 and the second beveled portion 62 of the intermediate part 34. More generally, the intermediate portion 82 is configured to cooperate with the intermediate part 34 of the mounting tool 30 to position the sealing cap 10 within the through hole 40.

The inner part 36 is slidably supported within and extends through the second cylinder 56 outlined by the intermediate part 34. The inner part 36 has a cylindrical portion 74 with an outer surface 76 conforming to the second cylinder 56. The cylindrical portion 74 has a transverse surface 78 connected to the outer surface 76. The outer surface 76 and the transverse surface 78 are unbroken, and the latter is planar. The mounting tool 30 has a cap holder 72 in the form of a magnet embedded in the transverse surface 78 by which the sealing cap 10 is releasably attached to the inner part 36.

The inner portion 84 outlines a hollow fourth cylinder 94 having an open first end 96 and an open second end 98. The diameter of the fourth cylinder 94 is smaller than the diameter of the third cylinder 56 outlined by the intermediate portion 82. This forms a ledge 100 between the intermediate portion 82 and the inner portion 84. The fourth cylinder 94 has a diameter that is greater than the diameter of the second cylinder 56 outlined by the intermediate part 34. The ledge 100 engages the second layer 24 of the sealing cap 10 at the first rim 13, as shown in Fig. 4d. The first sealing cap 10 is positioned with the first side 14 of the first layer 12 facing and contacting the ledge 100. This way, the ledge 100 engages the second layer 24 at the first rim 13 or the second rim. The ledge 100 cooperates with the intermediate part 34 of the mounting tool 30 such that the sealing cap 10 is biased against the structure 38.

The transverse surface 78 of the inner part 36 engages the second side 16 of the sealing cap 10 at the center of the first rim 13, as shown in Fig. 4e. The inner part 36 pushes against the first layer 12 of the sealing cap 10, which causes the second layer 24 of the sealing cap 10 to engage the structure 38 at the first rim 13. The first layer 12 is subjected to a deforming force centered at the center of the first rim 13 and acting in the first direction. This biases the sealing cap 10 against the ledge 100, which provides a counterforce to the deforming force in the second direction and distributed along the first rim 13. This causes the sealing cap 10 to deformed in the first direction of the sealing cap 10 by a partial inversion of the bulge 12' formed by the first layer 12, thus transitioning from the pre-installment state to the post-installment state. This way, the inner portion 84 of the through hole 40 and the inner part 36 of the mounting tool 30 are configured to cooperate for deforming the first layer 12 of the sealing cap 10 by inverting the bulge 12*'* within the through hole 40.

As described above, the first radius (R1) of the circular first edge 18 and the second radius (R2) of the circular second edge 20 increase at a deformation of the first layer 12 in the first direction. The first rim 13 of the first layer 12, or more precisely the first edge 18 of the first side 14 of the first layer 12, expands radially outwards and locks the sealing cap 10 to the intermediate portion 82 of the structure 38, thus radially fixing the sealing cap 10 to the structure 38. As described above, the third radius (R3) of the second rim 29 is greater than the second radius (R2) of the circular second edge 20 after deformation. Thus, the protruding second rim 29 of the second layer 24 engages and radially seals to the intermediate portion 82 of the structure 38.

The mounting tool 30 has an initial state in which the outer part 32 extends beyond the intermediate part 34 and the intermediate part 34 extends beyond the inner part 36 in the initial state, as shown in Figs. 4a to 4c. The sealing cap 10 is positioned at the through hole 40 with the mounting tool 30 in the initial state. The mounting tool has an intermediate state in which the intermediate part 34 extends beyond the outer part 32 and beyond the inner part 32, as shown in Fig. 4d. The outer part 32 and the intermediate part 34 are hand operated and the mounting tool 30 transitions from the initial state to the intermediate state by pressing the intermediate part 34 forward relative to the outer part 32. The sealing cap 10 is positioned in the through hole 40 with the mounting tool 30 by transitioning to the intermediate state. The mounting tool 30 has a final state in which the intermediate part 34 extends beyond the outer part 32 and the inner part 36 extends beyond the open first end 58 of the hollow second cylinder 56 (described further below) outlined by the intermediate part 34, as shown in Figs. 4e and 4f. The mounting tool 30 transitions from the intermediate state to the final state by forcing the inner part 36 forward relative to the intermediate part 34, for example by a hammer blow. This deforms the sealing cap 10 within the through hole 40 and radially fixes it to the structure 38.

The deforming of the sealing cap 10 results in a sealed structure 38' with a deformed sealing cap 10 in its post-installment state coaxially positioned in the through hole 40.

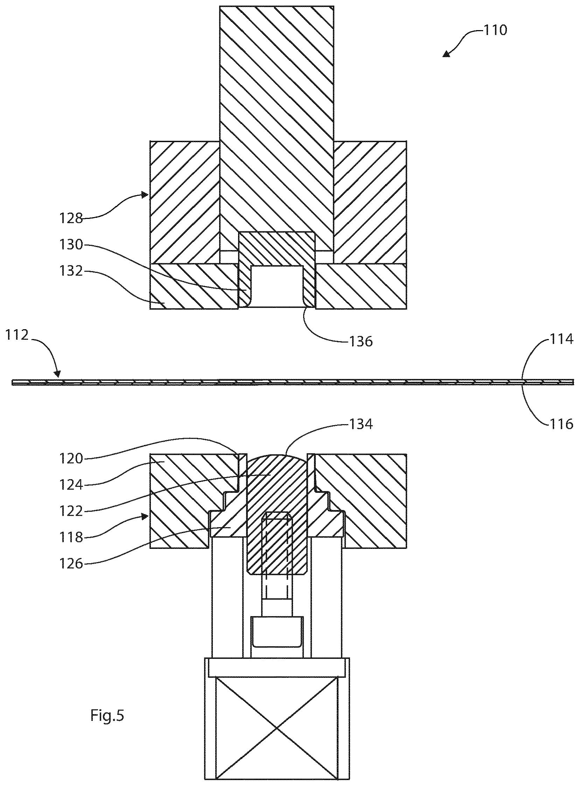

A system 110 for manufacturing the sealing cap 10 of Figs. 1a to 1c is shown in Fig. 5. The system 110 includes a composite material 112 having a first layer 114 of a first material and a second layer 116 of a second material that is attached to the first layer 114. The first layer 114 has a thickness of 0.8 mm and the second layer 116 has a thickness of 1 mm. The first layer 114 is of galvanized steel and a second layer 116 is of AEM rubber. This means that the first layer 114 is of a first material having a first Young's modulus and the second layer 116 is of a second material having a second Young's modulus that is lower than the first Young's modulus of the first material.

The system 110 has a die assembly 118 with a combined circular blanking die 120 and forming die 122. The die assembly 118 further has a die base 124 and an ejector 126. The forming die 122 is positioned within and coaxial with the blanking die 120, which is circular for forming a blank having a first layer with a circular first rim and a second layer with a circular second rim.

The system 110 further has a punch assembly 128 including a punch 130 and a punch base 132. The composite material 112 is positioned between the die assembly 118 and the punch assembly 128 with the second material 116 facing the die assembly 118.

The punch 130 cooperates with the blanking die 120 for cutting the blank from the composite material 112. The blank is positioned at the forming die 122 after the blanking and the punch 130 cooperate with the forming die 122 to form the blank as the sealing cap 10 described above in relation to Figs. 1a to 1c, 2a and 2b. The second layer 116 of the composite material 112 facing the die assembly 118 results in the second layer 116 protruding from the first layer 112 after the blanking. The punch and the blanking die have a clearance of 0.1 mm causing the second layer to protrude by 0.1 mm.

The forming die 122 has convex portion 134 facing the punch 130. The punch 130 has a smooth annular surface 136 facing the forming die 122 that is locally convex, has a positive curvature, and curves inward and away from the forming die 122. The forming die 122 and the punch 130 are coaxial and the annular surface 136 engages and slides over the blank. This way, the forming die 122 and the punch 130 cooperate to form the bulge 12' of the resulting sealing cap 10 with the bulge 12' projecting towards the punch 130.

The system 110 performs a single punching. The punch assembly 128 is lowered towards the die assembly 118 until the composite material 112 is pressed between the planar punch base 132 and the planar die base 124. The punch 130 continues downwards and cooperates with the blanking die 120 and the forming die 122 as described above. After the sealing cap 10 has been formed, it is ejected from the blanking die 120 by the ejector 126.

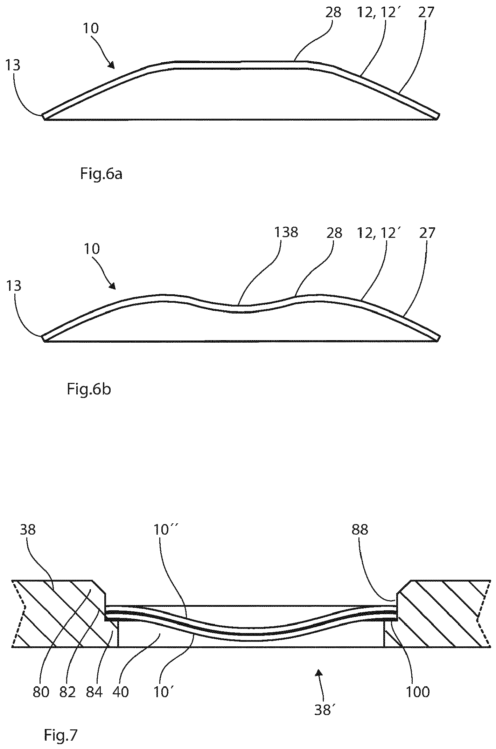

Sealing caps 10 with different rotationally symmetric shapes are shown in Figs. 6a and 6b. In Fig. 6a the first layer 12 of the sealing cap 10 has an outer portion 27 that is locally convex on the second side 16 and an inner portion 28 that is planar on the second side 14. The outer portion 27 is then locally concave on the first side 14 and the inner portion 28 is planar on the first side 14. This means that the outer portion 27 forms the bulge 12' projecting in the second direction.

In Fig. 6b the first layer 12 of the sealing cap 10 has an outer portion 27 that is locally convex on the second side 16 and an inner portion 28 that is locally concave on the second side 14. The outer portion 27 is then locally concave on the first side 14 and the inner portion 28 is locally convex on the first side 14. This means that the outer portion 27 forms the bulge 12' projecting in the second direction and the inner portion 28 forms an additional bulge 138 projecting in the first direction.

A cross-section view of a structure 38 sealed with a first sealing cap 10' and a second sealing cap 10" is shown in Fig. 7. Each sealing cap 10' and 10" has the features of the radial sealing cap 10 described above in relation to Figs. 1a to 1c, 2a and 2b, which means that they are of the same type. The structure 38 has the same features as the structure 38 described in relation to Figs. 3 and 4a to 4f, with the only difference that the intermediate portion of 82 of the structure 38 is deeper providing more space for the radial second sealing cap 10*".*

The first sealing cap 10*'* is installed as described in relation to Figs. 4a to 4f. The second sealing cap 10" is installed after the first sealing cap 10'. It is installed in the same manner with the only difference that it is positioned with the first side 14 of the first layer 12 facing the first sealing cap and contacts the first sealing cap 10' instead of the ledge 100. The second sealing cap 10*"* is biased against the first sealing cap by the intermediate part 34 of the mounting tool 30. The first sealing cap 10*'* is biased against the ledge 100. In extension this means that the intermediate part 34 also biases the second sealing cap 10" relative to the structure 38. The inner part 36 of the mounting tool 30 deforms the first layer 12 as described above, with the only difference that the second sealing cap 10" is biased against the first sealing cap. The first side 14 of the second sealing cap 10" is flush with and conforms to the second side 16 of the first sealing cap 10' after the deformation of the former. The second sealing cap 10" is then radially fixed to and cooperates with the structure 38 in the same manner as the first sealing cap 10*'*.

In the described embodiment the installation of the second sealing cap 10" is performed after the installation of the first sealing cap 10'. In another embodiment, the second sealing cap 10' is positioned in the through hole 40 immediately after the first sealing cap 10' has been positioned in the through hole 40. Both sealing caps 10' and 10" are then simultaneously deformed by the inner part 36 of the mounting tool 30 pushing against the first layer 12 of the second sealing cap 10", which causes the second layer 24 of the first sealing cap 10' to engage the structure 38 at the first rim 13. The second sealing cap 10" is subjected to the deforming force acting in the first direction at the center of the first rim 13. The ledge 100 provides a counterforce to the deforming force in the second direction that is distributed along the first rim 13 of both the first sealing cap 10*'* and the second sealing cap 10". This causes both sealing caps 10' and 10" to be deformed in the first direction by a partial inversion of the bulge 12' formed by the first layer 12.

Item list
- 10: radial sealing cap
- 10': first sealing cap
- 10": second sealing cap
- 12: first layer
- 12': bulge
- 13: first rim
- 14: first side of first layer
- 16: second side of first layer
- 17: first plane
- 17': interior angle
- 18: first edge of first side
- 20: second edge of second side
- 22: common axis of first and second edges
- 24: second layer
- 26: rim surface of first layer
- 27: outer portion of first layer
- 28: inner portion of first layer
- 29: second rim of second layer
- 30: mounting tool
- 32: outer part of mounting tool
- 34: intermediate part of mounting tool
- 36: inner part of mounting tool
- 38: structure
- 38': sealed structure
- 40: through hole of structure
- 42: symmetry axis of mounting tool
- 44: hollow first cylinder
- 46: open first end of hollow first cylinder
- 48: open second end of hollow first cylinder
- 50: first beveled portion of outer part
- 52: inner surface of first beveled portion
- 54: outer tapered surface of first beveled portion
- 56: hollow second cylinder
- 58: open first end of hollow second cylinder
- 60: open second end of hollow second cylinder
- 62: second beveled portion
- 64: inner surface of second beveled portion
- 66: outer surface of second beveled portion
- 68: inner tapered surface of second beveled portion
- 70: first acute edge
- 72: second acute edge
- 74: cylindrical portion of inner part
- 76: outer surface of cylindrical portion
- 78: transverse surface
- 79: cap holder
- 80: outer portion of structure
- 82: intermediate portion
- 84: inner portion
- 86: inner tapered surface
- 88: third cylinder
- 90: first end of third cylinder
- 92: second end of third cylinder
- 94: fourth cylinder
- 96: first end of fourth cylinder
- 98: second end of fourth cylinder
- 100: ledge
- 110: system
- 112: composite material
- 114: first layer of composite material
- 116: second layer of composite material
- 118: die assembly
- 120: blanking die
- 122: forming die,
- 124: die base
- 126: ejector
- 128: punch assembly
- 130: punch
- 132: punch base
- 134: convex portion of forming die
- 136: annular surface of punch
- 138: additional bulge

## Claims

1. A radial sealing cap (10), wherein the sealing cap (10) comprises:
- a first layer (12), wherein the first layer (12) is of a first material having a first Young's modulus, the first layer (12) has a first side (14) facing in a first direction and a second side (16) facing in a second direction, the first layer (12) has a circular first rim (13) defining a plane (17) in which the first rim (13) is embedded, and the first layer (12) has a slope relative to the plane (17) at the first rim (13); and
- a second layer (24) attached to the first side (14) of the first layer (12), wherein the second layer (24) is of a second material having a second Young's modulus that is lower than the first Young's modulus, and the second layer (24) protrudes radially from the first layer (12) at the first rim (13) .

2. The radial sealing cap (10) according to claim 1, wherein the first layer (12) defines an interior angle (17*'*) to the plane (17) at the first rim (13), and the interior angle is in the range 10° to 40°, 15° to 35°, or 20° to 30°.

3. The radial sealing cap (10) according to claim 1 or 2, wherein the first side (14) has a circular first edge (18) with a first radius (R1), the second side (16) has a circular second edge (20) with a second radius (R2) that is greater than the first radius (R1), and the sealing cap (10) is configured to increase the second radius (R2) of the second edge (20) at a deformation of the first layer (12) in the first direction.

4. The radial sealing cap (10) according to claim 3, wherein the sealing cap (10) is configured to increase the first radius (R1) of the first edge (18) at a deformation of the first layer (12) in the first direction, and the first radius (R1) increases more than the second radius (R2) at the deformation.

5. The radial sealing cap (10) according to claim 3 or 4, wherein the second layer (24) a circular second rim (29) having a third radius (R3), and the third radius (R3) is greater than the first radius (R1) and smaller than the second radius (R2).

6. The radial sealing cap (10) according to any of the claims 1 to 5, wherein the first layer (12) forms a bulge (12') projecting in the second direction.

7. The radial sealing cap (10) according to any of the claims 1 to 6, wherein the first material comprise metal and the second material comprises a polymer or elastomer.

8. A mounting tool (30) is proposed for holding and mounting a radial sealing cap (10) according to any of the claims 1 to 7, wherein the mounting tool (30) comprises:
- an outer part (32) configured to position the sealing cap (10) in a first position relative to the mounting tool (30);
- an intermediate part (34) slidably supported within the outer part (32) and configured to engage the second side (16) at an outer portion (27) of the first layer (12) forming the first rim (13); and
- an inner part (36) slidably supported within the intermediate part (34) and configured to engage the second side (16) at the center of a circle defined by the first rim (13) .

9. An assembly comprising a structure (38) forming a through hole (40) and a mounting tool (30) according to claim 8 for holding a radial sealing cap according to any of the claims 1 to 7, wherein the structure (38) has an outer portion (80), an intermediate portion (82), and an inner portion (84) that jointly forms the through hole (40), the outer portion (80) is configured to cooperate with the outer part (32) of the mounting tool (30) for centering the sealing cap (10) on the through hole (40), the intermediate portion (82) is configured to cooperate with the intermediate part (34) of the mounting tool (30) to receive the sealing cap (10), and the inner portion (84) is configured to cooperate with the inner part (36) of the mounting tool (30) for deforming the first layer (12) of the sealing cap (10) within the through hole (40).

10. A sealed structure (38') comprising:
- a structure (38) forming a through hole (40); and
- a radial first sealing cap (10') according to any of the claims 1 to 7, wherein the first sealing cap (10') is positioned in the through hole (40), the first sealing cap (10') is deformed within the through hole (40), and the first sealing cap (10') is radially fixed to the structure (38).

11. The sealed structure (38') according to claim 10, wherein the sealed structure (38') further comprises:
- a radial second sealing cap (10") according to any of the claims 1 to 7, the second sealing cap (10*"*) is positioned in the through hole (10), the second sealing cap (10") is deformed within the through hole (40), and the second sealing cap (10") is radially fixed to the structure (38).

12. A method for mounting a radial first sealing cap (10*'*) according to any of the claims 1 to 7 in a through hole (40) of a structure (38), wherein the method comprises:
- positioning the first sealing cap (10') in the through hole (40); and
- deforming the first sealing cap (10') or the first layer (12) of the first sealing cap (10') for radially fixing the first sealing cap (10') to the structure (38).

13. The method according to claim 12, wherein the method further comprises:
- positioning a second radial sealing cap (10") in the through hole (40); and
- deforming the second sealing cap (10") for radially fixing the second sealing cap (10") to the structure (38).

14. A system (110) for manufacturing a radial sealing cap (10), wherein the system comprises:
- a composite material (112) comprising a first layer (114) of a first material and a second layer (116) of a second material attached to the first layer (114), wherein the first material has a first Young's modulus and the second material has a second Young's modulus that is lower than the first Young's modulus;
- a die assembly (118) comprising a combined blanking die (120) and forming die (122);
- a punch (130) configured to cooperate with the die assembly (118) in a single punching; wherein
the composite material (112) is positioned between the die assembly (118) and the punch (130) with the second layer (116) facing the die assembly (118), the punch (130) is configured to cooperate with the blanking die (120) for cutting a blank from the composite material (112), the die assembly (118) is configured to position the blank at the forming die (122) subsequent to blanking, and the punch (130) is configured to cooperate with the forming die (122) to form the blank with a circular first rim (13) defining a plane (17) in which the first rim (13) is embedded, and the first layer (12) has a slope relative to the plane (17) at the first rim (13).

15. A method for manufacturing a radial sealing cap (10) from a composite material (112) using a die assembly (118) and a punch (130), the composite material (112) comprises a first layer (114) of a first material and a second layer (116) of a second material attached to the first layer (114), wherein the first material has a first Young's modulus and the second material has a second Young's modulus that is lower than the first Young's modulus, the die assembly (118) comprises a combined blanking die (120) and forming die (122), the punch (130) is configured to cooperate with the die assembly (118) in a single punching, the punch (130) is configured to cooperate with the blanking die (120) for cutting a blank from the composite material (112), the die assembly (118) is configured to position the blank at the forming die (122) subsequent to blanking, and the punch (130) is configured to cooperate with the forming die (122) to form the blank with a circular first rim (13) defining a plane 17 in which the first rim (13) is embedded and the first layer (12) has a slope relative to the plane 17 at the first rim (13), and the method comprises:
- positioning the composite material between the die assembly and the punch with the second layer facing the die assembly; and
- operating the punch to form the blank.
